Europäisches Patentamt

European Patent Office

Office européen des brevets

(19)

(11) Publication number: **0 001 744**
**B1**

(12) **EUROPEAN PATENT SPECIFICATION**

(45) Date of publication of patent specification: **04.08.82**

(51) Int. Cl.³: **A 61 C 9/00**

(21) Application number: **78100914.7**

(22) Date of filing: **18.09.78**

(54) Bite registration device.

(30) Priority: **07.10.77 US 840492**

(43) Date of publication of application:
**16.05.79 Bulletin 79/10**

(45) Publication of the grant of the patent:
**04.08.82 Bulletin 82/31**

(84) Designated Contracting States:
**BE CH DE FR GB LU NL SE**

(56) References cited:
**US - A - 2 583 170**
**US - A - 2 895 219**
**US - A - 3 604 116**
**US - A - 3 822 473**

(73) Proprietor: **Lustig, Leopold Paul, Dr.**
**Newton Centre 304 Greenwood St.**
**Massachusetts 02159 (US)**

(72) Inventor: **Lustig, Leopold Paul, Dr.**
**Newton Centre 304 Greenwood St.**
**Massachusetts 02159 (US)**

(74) Representative: **Hansmann, Axel, Dipl.-**
**Wirtschafts-Ing. et al,**
**Patentanwälte HANSMANN & VOGESER Albert-**
**Rosshaupter-Strasse 65**
**D-8000 München 70 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Bite registration device

Background of the Invention

This invention relates to bite registration in the human mouth, and particularly to the task of obtaining a bite registration with the jaws in true centricity upon occlusion of the teeth, as is required for example in producing good fitting dentures. The problem is well recognized and prior attempts to solve it are described in U.S. patents of Jones, Nos. 2,713,202; 3,574,259; and 3,987,548, among others. Jones uses bibs of gauze to carry impression paste. According to the Jones' U.S. patent No. 3,895,219 the carrier for supporting the impression material is a bib which comprises a piece of thin, soft, flexible openmesh material which may be molded or woven to provide a "fabric", for example a material approximating very light weight gauze, or mosquito netting (col. 2, lines 51—54). According to U.S. patent No. 2,583,170 (Setz) a piece of foraminous or reticulated material such as gauze is held in a relatively taut position and is adapted to support the impression material (col. 3, lines 12—17). Beck's U.S. Pat. No. 4,003,132 is another example of the use of textile web to carry dental impression medium, on one or both sides of the web. An earlier U.S. Pat. of Lucia, No. 2,633,637 describes a high-spot marker using a textile, paper or cellophane coated on one or both sides with a soft wax to cover a marking material. Shpuntoff U.S. Pat. No. 3,604,116 describes a proposed improvement in the high spot marker of Lucia wherein the carrier for bite waxes and the like is made of a strong pliable sheet of material having a thickness of less than 0.020 mm. The mechanical strength of the sheet material must be much greater than that of the impression material (col. 1, lines 50—56); metallic foils of gold and aluminium, and non-metallic plastic foils are suggested. It is asserted that thicker carriers for the impression material disturb the normal bite, and reliance is placed on the elastic compressibility of the periodontal membranes which separate the roots of the teeth from the bones of the jaws. Specifically, Shpuntoff states (col. 1, lines 38—44) that the membranes have normal thickness of about 0.030 to 0.035 mm and can be reduced in thickness by slightly less than 0.010 mm by forces available in biting so that a separation of the upper and lower teeth by less than 0.020 mm may be compensated by compression of the periodontal membranes.

I have discovered that the prior art bite registration devices are deficient in that they ignore the proprioceptive neuromuscular mechanism controlling the jaw motions. Reference is made, for example, to "Current Clinical Dental Terminology" Boucher-Editor, published by The C. V. Mosley Company, Saint Louis, 1974, pages 316 and 317, where the terms "proprioceptors" and "proprioceptive neuromuscular mechanism" are defined as follows:

"Proprioceptors — Sensory nerve receptors situated in the muscles, tendons, and joints that furnish information to the central nervous system concerning the movements and positions of the limbs, the trunk, the head and neck, and more specifically for the dentist, the mandible and its associated oral structures. As a result of these stimuli received by the nerve centers, the contractions of individual muscles and groups of muscles are coordinated to produce smooth, finely adjusted, effective movements that would be impossible in the absence of such information.

"Proprioceptive neuromuscular mechanism — A biomechanical hookup of sensory and motor nerve trunk lines that control or help automate the muscular activities of posture. The muscular sensation and memory of jaw motions, relations, and positions in space should be studied to understand better the disorderly actions (ataxia) of the mandible. Appreciation of the automaticity of gnathic procedure grows as the student studies the well-ordered relations of the organically fit mouth (eutaxia). The outer informants of jaw movement and positions are receptors in the periodontium, the jaw joint capsules, and the important chewing muscles. What these reporters discover is "wired" to centers in either the brain or the spinal chord. These centers of recorded neural learning command the effectors to care for the needs of the jaw, if possible, by stimulating the correct controls of jaw action. Even after the effectors begin, other signals from receptors such as those of touch, pain, and pressure join with the proprioceptors in monitoring both further corrections of the amounts of force and the directions in which the vector is running. Such monitoring is called feedback (Gnathol.)"

Without taking the proprioceptor nerves into account, fine adjustments in bite registration cannot be made. Even a single human hair between two occluding teeth will alter the true bite. A film that is as much as 0.020 mm thick, which compresses the periodontal membranes as much as 0.010 mm, will stimulate the sensory nerve receptors situation in the vicinity and thereby will alter the contractions of individual muscles and groups of muscles so that the true bite will be altered, however minutely. For that reason, a carrier for impression material which is made of a gauze or other fiber material whether woven or non-woven, or of a film, which exerts a back pressure on the periodontal membranes, is not suitable for taking impressions with the highest fidelity to the existing bite of a patient.

Contrary to the teachings of the prior art, the present invention proposes a carrier for impression material which is readily frangible under occlusal pressure on a registration material carried by said film so that it substantially lacks the ability to stimulate the proprioceptors associated with the teeth of which an occlusal impression is to be taken. Said frangible film may consist of a plastic material perforated over the major portion of its area so that it is largely foraminous. Such a carrier can be coated on one or both sides with impression material and, when placed in the mouth, will function primarily as a carrier for the impression material, and will exert a minimum of reactive force on the impression material in response to interdental pressure.

Brief Description of the Drawings

Figure 1 is a plan view of a full dental-arch bite registration device according to the invention;

Figure 2 is an enlarged section on line 2—2 of Figure 1;

Figure 3 is a section on line 3—3 of Figure 1;

Figure 4 is a further enlarged portion of Figure 2 showing a bite-registration material on the device;

Figure 4A is an enlarged detail of Figure 4;

Figure 5 is a view like Figure 4 showing a bite registration wax on the device;

Figure 6 is a section along line 6—6 of Figure 1;

Figure 7 schematically illustrates a prefabricated package including a bite registration device according to the invention.

Detailed Description of the Drawings

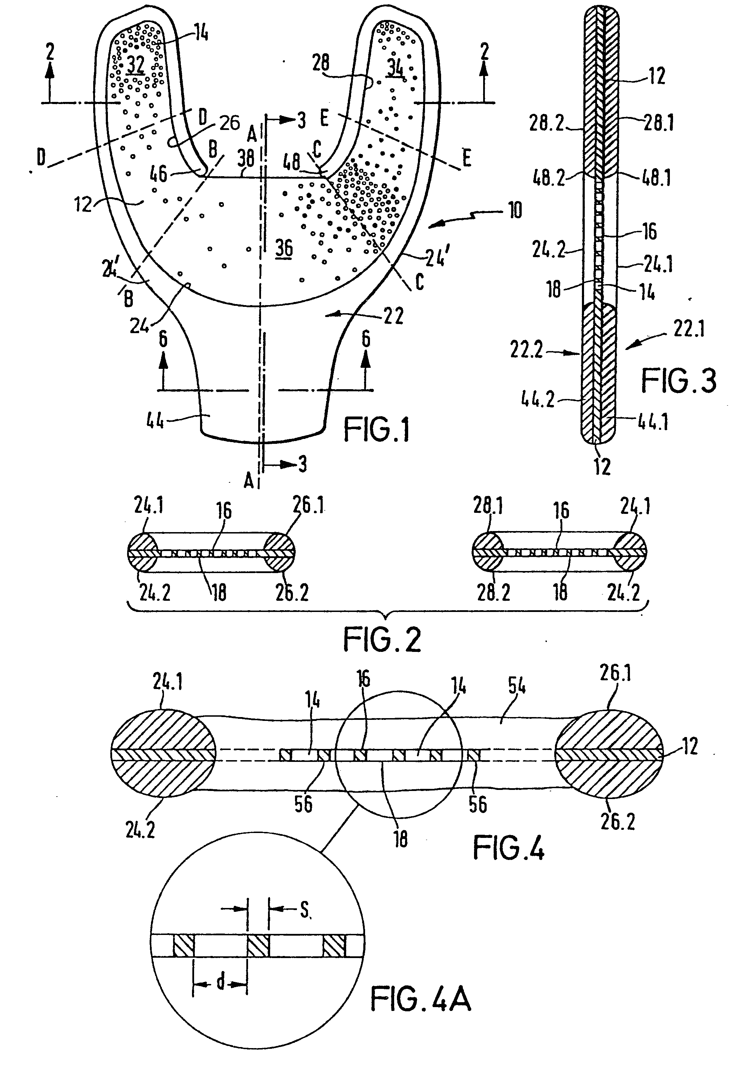

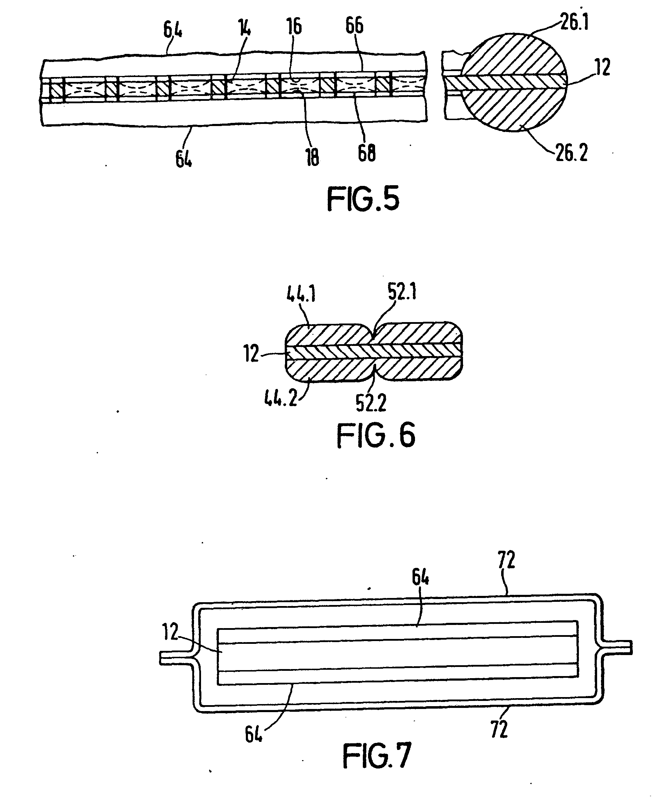

Figures 1 to 3, inclusive, show a carrier 10 for bite registration materials (shown in Figures 4 and 5). A formaminous film 12 has perforations 14 over the major portion of its surfaces 16, 18. A frame 22 is affixed to the film at its entire outer periphery 24 and at the quadrant portions 26, 28 of its inner periphery. The frame at its outer periphery 24' is shaped to the outer periphery of a full dental arch; at the inner periphery portions 26, 28 the frame is shaped to the inner periphery of the respective posterior quadrants. The film 12 is generally U-shaped and spans the frame 22 across the region 32, 34 of the lateral posterior teeth, that is, at the quadrants, and extends from the frame at the outer periphery 24 in the region 36 of the anterior teeth toward the frame at the inner periphery 26, 28, where the film has a free edge 38 extending between two free ends 46, 48 of the frame. A handle 44 extends from the frame at its outer anterior periphery 24, in the region 36 of the anterior teeth.

As is apparent in Figures 2 and 3, the frame 22 can be made in two like parts 22.1 and 22.2 between which the film 12 is held, as in a sandwich.

The frame parts 22.1 and 22.2 can be made of any of several suitable materials, such as plastics, paper or metal foils. The frame parts 22.1 and 22.2 can be attached to the film by any suitable adhesive materials that is nontoxic. In the case or cases where the film and frame parts are made of the same material, they can be integral. If both are of the same thermoplastic material, they can be attached by heating the frame parts and film between them to the temperature at which they will fuse or can be pressed together, and then cooling them; i.e.: by a form of plastic welding. Figure 3 shows the device as it appears in side view in the region 34 of one quadrant, where the frame parts 28.1 and 28.2 at the inner periphery support the film 12, these parts terminating in the free ends 48.1 and 48.2, The handle 44 is also in two parts 44.1 and 44.2 with the film 12 between them; although the film 12 is shown without perforations in the handle portion, it can be perforated in which case any adhesive cement or the like used to attach the frame parts to the film would pass through the perforations and fasten the frame parts directly together.

The device can be made for full dental-arch bite registration, with provision for separating it into sections that can be used for partial-arch bite registration, as is shown in Figure 1. Dashed lines A—A, B—B, C—C, D—D, and E—E each traversing the device 10 from the outer peripery 24 to the inner periphery, represents lines along which the device can be weakened, or cut, for separating it into such sections. Thus, if parted on line A—A, the device will provide two half-sections each with a portion of the handle 44, suitable for right-half-arch, or left-half-arch bite registration. Likewise, if parted on line B—B or C—C the device will provide a small portion suitable for taking a bite-registration impression of a quadrant, including bi-cuspids or pre-molars, and molars. In this case, the frame at the outer periphery will extend forward so that the frame end 24' formed at the parting line can be used as a handle. Further, a smaller section parted on line D—D or E—E would be useful for taking an impression of a partial quadrant consisting of molars. The frame 22 can be weakened along lines A—A, B—B, C—C, D—D and E—E, to facilitate separating the device 10 into parts. For example, the frame can be grooved along a line, as shown at 52.1 and 52.2 in Fig. 6 which is on line A—A. For taking an impression of posterior teeth only, the center anterior portion 36 of the film 12 can be removed.

Pastes for taking bite registrations are available in forms which are soft when applied, and then harden in the mouth responsive to hygroscopic changes. The paste 54 shown in Figure 4 may be such a paste, or any other suitable paste. Layers of the paste 54 are applied to both sides 16, 18 of the film 12 supported by the frame parts 24.1, 24.2, 26.1 and 26.2, and the paste 54, extends through the perforations 14. The film material separating the perforations, as shown at 56, 56, is thin also in the plane of the film, so that the film is readily frangible when the occlusal surfaces of the maxillary and mandibular arches apply pressure to the paste 54. Thus, for example as seen in Fig. 4A, the holes 14, if round, may have a diameter "d" between about 1.5 mm to 2.0 mm, while the thickness "s" of the film material between two adjacent holes may be 1 mm or less. The film 12 itself may be about 0.020 mm thick. The nerves that are sensitive to touch, called "proprio-ceptors", will alter the bite, however, minutely, when they feel pressure. For that reason, a carrier for the paste which is made of gauze or other woven fiber material, or of a film which is strong enough to exert a back pressure such as Shpuntoff's is not suitable for taking impressions with the highest fidelity to the existing bite of a patient. In the present invention the film 12 is readily frangible where present between occluding teeth, so as to minimize creating a reaction which will bring these nerves into play. It is intended in this invention that the film 12 shall function, for all practical purposes, solely as a carrier for the paste, creating a minimum of reactive force on the paste 54 in response to interdental pressure. The present invention thus provides a greater sensitivity to the contours of the occlusal surfaces than has heretofore been available, and provides a tool enabling the skilled restorative dentist to make fine adjustments in a restoration.

Figure 5 shows an arrangement useful for making wax impressions of a bite. In this use of the invention the wax 64 is preferably a wax that is slow to set up, in order to provide adequate time to prepare the bite registration device and to take the impression. Ordinary dental waxes are made sticky by heating them, and become very hard and brittle when cooled. To facilitate use of a soft wax, the film 12 supported at the right hand end by the frame parts 26.1 and 26.2 is preferably coated on each side 16, 18 with a layer 66, 68, respectively, of an adhesive material, having suitable nontoxic properties. These layers are very thin. The adhesive serves to aid the perforations 14 in holding the wax to the film, and thereby make it possible to use a wax that is not itself sticky. Such a wax can respond to fine details in the occlusal surfaces of confronting teeth without sticking to the teeth. In combination with the readily frangible film 12, the wax can provide superior sensitivity to such fine details. A suitable wax for this purpose is that known as "Iowa" wax, a paraffin wax which is translucent when hard and opaque when soft, and which softens when heated. This wax is an accepted dental material, as recognized by the American Dental Association. A prefabricated structure according to Figure 5, without the frame 22, is illustrated schematically in Figure 7, with a protective enclosure 72 which is intended to be removed before the device is used. This device can be kept at room temperature or in a refrigerator prior to use, and to use it, after removing the enclosure 72 it may be dipped in water at about 140°F to soften the wax 64 without causing it to flow: this condition will become apparent when the wax becomes opaque. The device is then placed to take the desired impression, the opposing arches or sections are closed on it, and then cold water may be applied to set the wax hard; that condition will become apparent when the wax becomes translucent.

The frangible film 12 can be made of a paper material, a plastics material or a metal foil. The strength of the film material itself is removed as a consideration by making the film into a web by perforating it, for example as described above, so that the film material between perforations is readily frangible. The impression material extends through the perforations so that in large measure the device is substantially entirely impression material adapted to be held in place by a carrier which has little or no significant ability to bring the proprioceptors into play when it is used in the mouth of the patient. While the frame 22 is useful for handling and manipulating the device, the invention contemplates that devices employing it may be supplied in the form of sheets or pieces without frames, in particular if the impression material is of a type that is adequately firm when cold so that it can be packaged, shipped and handled before it is used, like Iowa wax. Thus both devices which are coated with impression material by the dentist just prior to use, and prefabricated devices combining impression material and a frangible carrier, are within the scope of this invention.

With the present invention, it is possible to do check bites in plaster, for equilibrating full dentures (upper and lower) in the laboratory. A frangible carrier 12 will then be coated on each side with a thin layer of a plaster which hardens, and an accurate cast of the bite can be made. The particular form of perforations used is widely variable; holes or slits can be used, holes being preferred to minimize the quantity of carrier film that will be present.

In the carrier 12, the perforations 14 may take any desired shape — e.g.: round, square, rectangular, triangular or parallelogram. In any event, the septal thickness in distance "s" (see Fig. 5) should be small enough to assure that in use the carrier will minimally stimulate the proprioceptors associated with the teeth of which an occlusal impression is to be taken; preferably there will be no noticeable stimulation of these nerves, and the fidelity or accuracy of the impression will be more reliable than has up to now been possible.

## Claims

1. A bite registration device for introducing bite registration material (54) between the occlusal surfaces of teeth comprising a carrier (12) in foraminous film form capable of retaining on at least one of its surfaces a bite registration material (54), characterized in that said carrier (12) is readily frangible under occlusal pressure on a registration material carried by said film so that it substantially lacks the ability to stimulate the proprioceptors associated with the teeth of which an occlusal impression is to be taken.

2. A device according to claim 1 wherein said foraminous film (12) is perforated over a major portion of its surfaces (16, 18) providing a septal distance (s, 16) between perforations (d, 14) so small that the material of said film (12) between perforations (d, 14) is readily frangible under occlusal pressure (Fig. 4, 4A).

3. A device according to claims 1 or 2 having on each of said sides (16, 18) an adhesive material (66, 68) for holding a wax (54, 64).

4. A device according to claim 3 having a wax (54, 64) on each of said sides (16, 18).

5. A device according to any one of the claims 1 to 4 including a protective cover (72) for storing the device until used.

6. A device according to any one of the claims 1 to 5 wherein said film (12) is perforated over more than one-half of its surface.

7. A device according to any one of claims 1 to 6 including frame means (22) peripherally supporting said film (12).

8. A device according to claim 7 for full-dental-arch use wherein said frame means (22) is shaped to the outer periphery of a full arch and to the inner periphery of the posterior lateral teeth in both quadrants, and said film (12) is generally U-shaped spanning the frame means (22) at said quadrants and extending from said frame means (22) at the anterior part of said outer periphery toward said frame means (22) at said inner periphery in the region of the anterior teeth.

9. A device according to claim 8 which is weakened along one or more lines (A, B, C, D, E) traversing the device from the outer periphery to the inner periphery, for breaking the device into one or more portions for partial-arch use.

10. A device according to any one of the claims 7 to 9 including handle means (44) attached to said frame means (22).

11. A device according to claim 10 including an outwardly-extending handle means (44) attached to said frame means (22) at said anterior part of said outer periphery.

12. A device according to any one of the claims 1 to 11, wherein said carrier (12) is made of a material selected from plastics, paper and metal films.

**Revendications**

1. Dispositif d'enregistrement d'occlusion pour l'introduction d'une matière (54) d'enregistrement d'occlusion entre les surfaces occlusales de dents, comprenant un support (12) sous la forme d'un film poreux capable de retenir, sur au moins l'une de ses surfaces, une matière (54) d'enregistrement d'occlusion, caratérisé en ce que ledit support (12) peut être aisément rompu sous une pression occlusale s'exerçant sur une matière d'enregistrement portée par ledit film de manière qu'il ne puisse pratiquement pas stimuler les propriocepteurs associés aux dents dont une empreinte occlusale doit être prise.

2. Dispositif selon la revendication 1 dans lequel ledit film poreux (12) est perforé sur la plus grande partie de ses surfaces (16, 18), établissant une distance septale (s, 16) entre perforations (d, 14) si faible que la matière dudit film (12) entre les perforations (d, 14) peut être aisément rompue sous une pression occlusale (figure 4, 4A).

3. Dispositif selon les revendications 1 ou 2, ayant, sur chacune desdites faces (16, 18), une matiére adhésive (66, 68) pour maintenir une cire (54, 64).

4. Dispositif selon la revendication 3, ayant une cire (54, 64) sur chacune desdites faces (16, 18).

5. Dispositif selon l'une quelconque des revendications 1 à 4 comprenant un couvercle protecteur (72) pour stocker le dispositif jusqu'à l'utilisation.

6. Dispositif selon l'une quelconque des revendications 1 à 5 dans lequel ledit film (12) est perforé sur plus de la moitié de sa surface.

7. Dispositif selon l'une quelconque des revendications 1 à 6 comprenant un bâti (22) supportant de manière périphérique ledit film (12).

8. Dispositif selon la revendication 7 pour une utilisation sur une arcade dentaire complète, dans lequel ledit bâti (22) présente la forme de la périphérie extérieure d'une arcade complète et de la périphérie intérieure des dents latérales postérieures des deux quadrants, et ledit film (12) est de forme générale en U occupant le bâti (22) auxdits quandrants et s'étendant dudit bâti (22) à la partie antérieure de ladite périphérique extérieure vers ledit bâti (22) à la périphérie intérieure dans la région des dents antérieures.

9. Dispositif selon la revendication 8, qui est affaibli suivant une ou plusieurs lignes (A, B, C, D, E) traversant le dispositif de la périphérie extérieure à la périphérie intérieure, pour rompre de dispositif en une ou plusieurs parties pour une utilisation sur une partie d'arcade.

10. Dispositif selon l'une quelconque des revendications 7 à 9 comprenant une poignée (44) reliée audit bâti (22).

11. Dispositif selon la revendication 10 comprenant une poignée (44) s'étendant vers l'extérieur, reliée audit bâti (22), á ladite partie antérieure de ladite périphérie extérieure.

12. Dispositif selon l'une quelconque des revendications 1 à 11, dans lequel ledit support (12) est réalisé en une matière choisie parmi les matières plastiques, du papier et des films métalliques.

**Patentansprüche**

1. Eine Gebiß-Aufzeichnungseinrichtung zur Einführung von Gebiß-Aufzeichnungsmaterial (54) zwischen die Zubißflächen von Zähnen, mit einem Träger (12) in Form einer von Löchern durchsetzten Folie, die auf wenigstens einer ihrer Oberflächen ein Gebiß-Aufzeichnungsmaterial festzuhalten vermag, dadurch gekennzeichnet, daß dieser Träger (12) unter einem Zubißdruck auf das von dieser Folie getragene Aufzeichnungsmaterial leicht zerbrechlich ist, so daß diese Folie im wesentlichen nicht in der Lage ist, die mit solchen Zähnen verbundenen Propriorezeptoren zu stimulieren, von denen ein Gebeßabdruck genommen wird.

2. Eine einrichtung nach Anspruch 1, wobei die von Löchern durchsetzte Folie (12) im Hauptabschnitt ihrer Oberflächen (16, 18) so perforiert ist, daß die Folienabschnitte (s, 16) zwischen den Löchern (d, 14) so klein sind, daß das Material der Folie (12) zwischen den Löchern (d, 14) unter dem Zubißdruck leicht zerbrechlich ist. (Fig. 4, 4A).

3. Eine Einrichtung nach Anspruch 1 oder 2, bei der sich auf jeder Seite (16, 18) ein Klebstoff (66, 68) zum Festhalten von Wachs (57, 64) befindet.

4. Eine Einrichtung nach Anspruch 3, bei der sich auf jeder Seite (16, 18) Wachs (54, 64) befindet.

5. Eine Einrichtung nach einem der Ansprüche 1 bis 4, mit einer Schutzabdeckung (72) zur Aufbewahrung der Einrichtung bis zu deren Gebrauch.

6. Eine Einrichtung nach einem der Ansprüche 1 bis 5, wobei diese Folie (12) über mehr als die Hälfte ihres Flächenbereichs perforiert ist.

7. Eine Einrichtung nach einem der Ansprüche 1 bis 6, mit einem Rahmen (22), um die Folie (12) an ihrem Umfang zu halten.

8. Eine Einrichtung nach Anspruch 7 für die Verwendung bei einem vollen Zahnbogen, wobei dieser Rahmen (22) an den Außenumfang eines vollen Zahnbogens und an den Innenumfang der hinteren Backenzähne in beiden Quadranten Angepasßt ist, und die Folie (12) im wesentlichen U-förmige Gestalt aufweist, den Rahmen (22) im Bereich dieser Quadranten überbrückt und sich vom Rahmen (22) am vorderen Teil des Außenumfangs bis zum Rahmen (22) am Innenumfang im Bereich der Frontzähne erstreckt.

9. Eine Einrichtung nach Anspruch 8, welche Soll-Bruchstellen längs einer oder mehrerer Linien (A, B, C, D, E) aufweist, welche vom Aussenumfang bis zum Innenumfang der Einrichtung verlaufen, um die Einrichtung für die Anwendung an Teilen eines Zahnbogens in einen oder mehrere Abschnitte zerbrechen zu können.

10. Eine Einrichtung nach einem der Ansprüche 7 bis 9, mit einem, an dem Rahmen (22) angebrachten Handgriff (44).

11. Eine Einrichtung nach Anspruch 10, mit einem nach außen abstehenden Handgriff (44), der an dem Rahmen (22) am vorderen Teil von dessen Außenumfang angebracht ist.

12. Eine einrichtung nach einem der Ansprüche 1 bis 11, wobei der Träger (12) aus einem der Materialien, nämlich Kunststoffen, Papier oder Metallfolien besteht.

0 001 744

FIG.1

FIG.3

FIG.2

FIG.4

FIG.4A

FIG.5

FIG.6

FIG.7